# EUROPEAN PATENT APPLICATION

(11) **EP 2 977 182 A1**
(43) Date of publication of application: **27.01.2016**
(21) Application number: 14306192.7
(22) Date of filing: 23.07.2014
(51) Int. Cl.: B29C 49/64, B29C 49/06

(54) **Electromagnetic processing module equipped with thermally regulated confinement elements**

(71) Applicant: SIDEL PARTICIPATIONS, 76930 Octeville-sur-Mer (FR)
(72) Inventor: FEUILLOLEY, Guy, 76930 OCTEVILLE SUR MER (FR); LAHOGUE, Yoann, 76930 OCTEVILLE SUR MER (FR)
(74) Representative: Louiset, Raphaël

(57) **Abstract**

Electromagnetic processing module (8) including:
- a main body (9) having a front face (10),
- a light emitting assembly (21) including a plurality of light emitting sources, the light emitting assembly (21) being such mounted onto the main body (9) as to radiate frontwards,
- a fluidic circuit provided within the main body (9) for thermal regulation of the light emitting assembly (21);
- at least one confinement element (44, 60, 71) made of a material opaque to the emitting light and having a confinement face (47, 61, 74, 79) exposed to the emitted light,
wherein that said confinement element (**44, 60, 71**) is mounted onto the main body (**9**) so as to be in thermal contact therewith, whereby thermal regulation of the confinement face (**47, 61, 74, 79**) is provided by the fluidic circuit (**24**).

## Description

### FIELD OF THE INVENTION

The invention generally relates to the electromagnetic processing of hollow bodies made of plastic material, in order to heat such hollow bodies.

More specifically, the invention relates to an electromagnetic heating of parisons of containers (such as bottles, jars or flasks), performed by passing them through processing unit, equipped with a plurality of sources of electromagnetic radiation, the term "parison" referring either to a preform, obtained by injecting a raw material into an injection mold, or to an intermediate container (or hollow body) obtained by blow molding a preform, which intermediate container requires a complementary thermal processing for any reason.

### BACKGROUND OF THE INVENTION

One possible application is the heating of parisons under the form of preforms in view of forming containers by stretch blow molding the preforms after they have been heated.

Although the conventional technique of heating parisons by means of tubular incandescent halogen lamps radiating according to Planck's law over a continuous spectrum is the most widely used to date, an alternative technology has recently emerged, based on the use of monochromatic or quasi-monochromatic radiation (such as lasers), emitting in the infrared range.

The performance and properties (particularly optical precision) of laser heating, which are superior to those of halogen heating, make it possible to achieve a faster and more selective heating of the parisons.

French patent application FR 2 982 790 and the equivalent PCT application WO 2113/076415 (both to Sidel Participations) both disclose a processing unit including a plurality of heating modules each provided with a plurality of infrared sources. More specifically, each heating module comprises:
- a main body,
- a light emitting assembly including a plurality of infrared light emitting sources,
- a fluidic circuit provided within the main body for thermal regulation of the light emitting assembly;
- at least one confinement element mounted onto the main body, said confinement element being made of a material opaque to infrared light and having a confinement face exposed to infrared light (either from the heating module to which it is attached, or from another heating module facing the latter).

The confinement element serves to reflect the infrared light toward the parisons and/or to limit dispersion of the infrared light outside the processing unit.

Despite its performances, there is still a need for enhancing the efficiency of the processing unit. More precisely, it is desired to maintain temperature of the whole processing unit at a low level, preferably close to atmospheric temperature, in order to limit thermal inertia and increase security of the processing unit, and also to minimize radiation interferences from the confinement elements.

### SUMMARY OF THE INVENTION

It is an object of the invention to provide an electromagnetic processing unit having increased security.

It is another object of the invention to provide an electromagnetic processing module and an electromagnetic unit having a low thermal inertia.

It is yet another object of the invention to provide an electromagnetic module provided with confinement elements which may be maintained at a temperature close to atmospheric temperature.

It is therefore provided, according to a first aspect, an electromagnetic processing module including:
- a main body having a front face,
- a light emitting assembly including a plurality of light emitting sources, the light emitting assembly being such mounted onto the main body as to radiate frontwards,

- a fluidic circuit provided within the main body for thermal regulation of the light emitting assembly;
- at least one confinement element made of a material opaque to the emitted radiation and having a confinement face exposed to the emitted radiation, said confinement element being mounted onto the main body so as to be in thermal contact therewith, whereby thermal regulation of the confinement face is provided by the fluidic circuit.

According to various embodiments, taken either separately or in combination:
- the confinement element is fixed to the main body by means of screws or any other fixation means providing tight contact;
- one confinement element is a reflector frame surrounding the light emitting assembly, and one confinement face of the reflector frame is an optically reflecting face oriented frontwards;
- the reflector frame has a rear edge opposite the reflecting face, said rear edge being in contact with the front face of the main body;
- one confinement element is a lower reflector mounted below the light emitting assembly, and one confinement face of the lower reflector is an optically reflecting face oriented upwards;
- the lower reflector is mounted onto the main body through a setting plate provided with means for adjusting vertical position of the lower reflector with respect of the main body, said setting plate serving as thermal bridge between the main body and the lower reflector;
- the setting plate has an optically reflecting face oriented frontwards;
- one confinement element is an upper absorber mounted above the light emitting assembly, and one confinement face of the upper absorber is an optically absorbing face oriented frontwards;
- the upper absorber has an optically reflective lower edge oriented downwards, positioned in the vicinity of an upper edge of the light emitting assembly;
- the light emitting assembly is received in a hollow front housing formed in the front face of the main body;
- the fluidic circuit comprises at least one intake channel formed in the main body, said intake channel opening, on the one hand, in the front housing through an intake hole and, on the other hand, on a rear face of the main body through an inlet port;
- the fluidic circuit comprises at least one discharge channel formed in the main body parallel to the intake channel, said discharge channel opening, on the one hand, in the front housing through a discharge hole and, on the other hand, on the rear face of the main body through an outlet port;
- the fluidic circuit comprises a pair of discharge channels formed on each side of the intake channel;
- the light emitting sources are designed for emitting in the infrared range, such as infrared laser diodes, e.g. VCSEL diodes.

It is further proposed an electromagnetic processing unit for processing parisons made of plastic, said processing unit comprising a series of adjacent processing modules as disclosed hereinbefore.

The above and other objects and advantages of the invention will become apparent from the detailed description of preferred embodiments, considered in conjunction with the accompanying drawings.

### BRIEF DESCRIPTION OF THE DRAWINGS

In the drawings:
**FIG.1** is a perspective view of a processing unit for processing parisons, including a series of adjacent processing modules.
**FIG.2** is a transversal cut view of the processing unit of **FIG.1****.**
**FIG.3** is a perspective, exploded front view of a processing module the processing unit of **FIG.1** is equipped with.
**FIG.4** is a perspective, exploded rear view of the processing module of **FIG.1**.
**FIG.5** is a perspective front view of an assembled processing module.
**FIG.5B** is a view similar to FIG.5, showing the processing module in a different configuration.

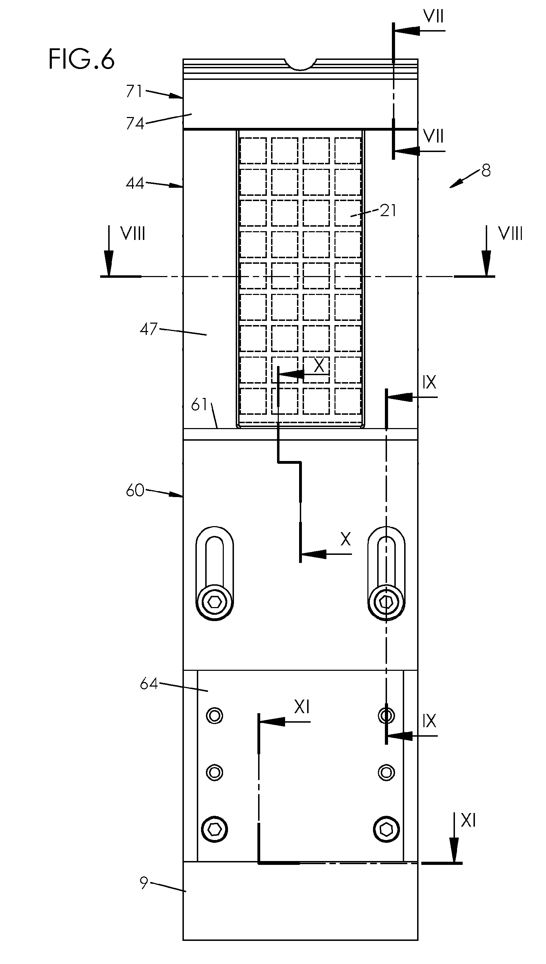

**FIG.6** is a front view of the processing module of **FIG.5**.
**FIG.7** is a detail cut view of the processing module of **FIG.6****,** taken along line VII-VII.
**FIG.8** is a detail cut view of the processing module of **FIG.6****,** taken along line VIII-VIII.
**FIG.9** is a detail cut view of the processing module of **FIG.6****,** taken along line IX-IX.
**FIG.10** is a perspective detail cut view of the processing module of **FIG.6****,** taken along line X-X.

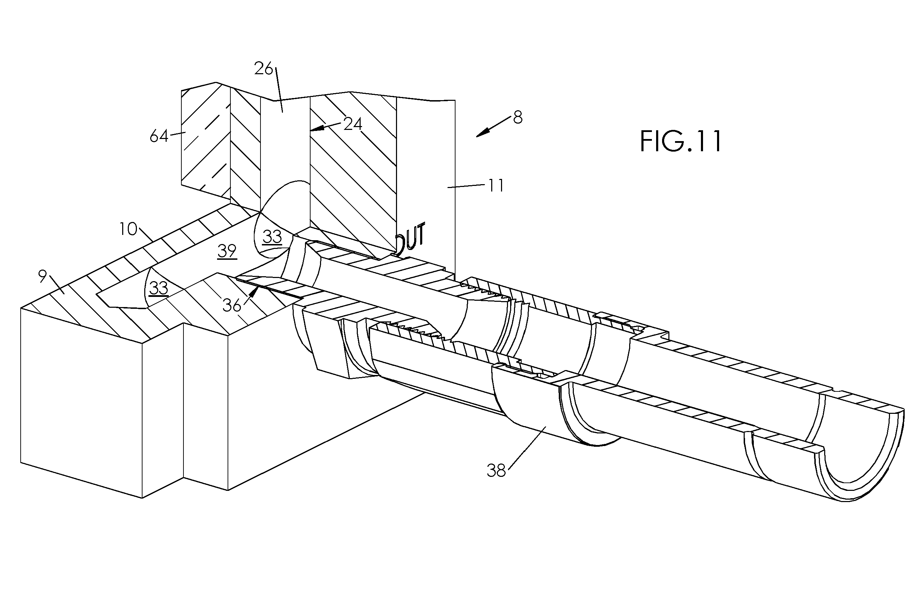

**FIG.11** is a perspective detail cut view of the processing module of **FIG.6****,** taken along line XI-XI.

### DETAILED DESCRIPTION

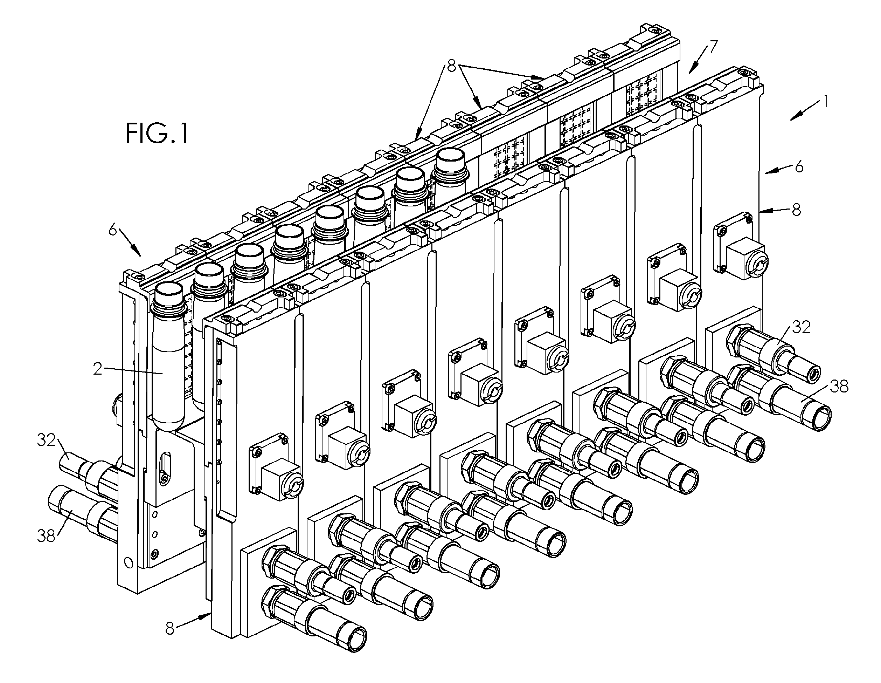

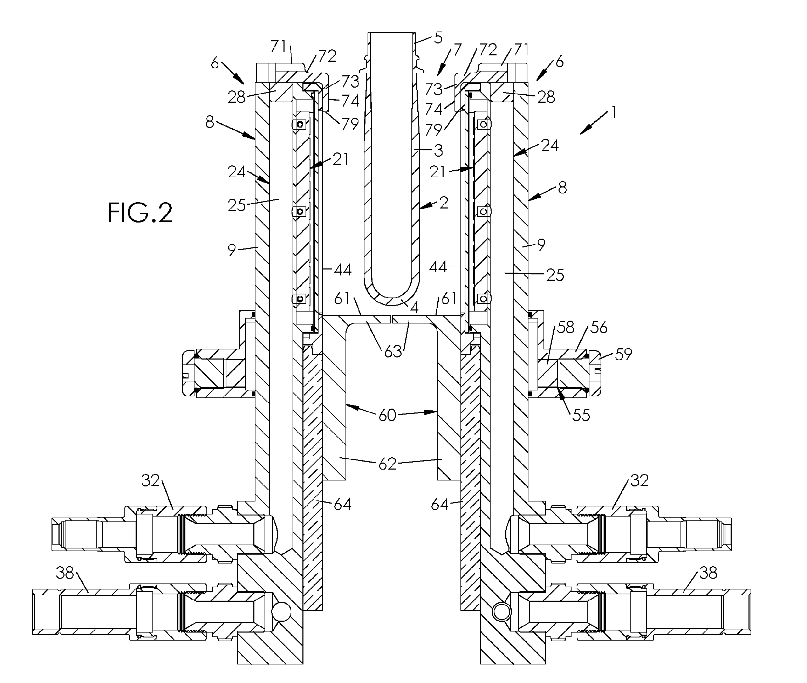

Depicted on **FIG.1** and **FIG.2** is an electromagnetic processing unit **1** for the processing (such as the heating or the decontamination) of parisons **2** made of a plastic material. In the illustrated example, the parisons **2** are preforms (e.g. made of polyethylene terephthalate or PET) intended, when heated (and therefore softened), to undergo a blowing or stretch-blowing operation in a mold to form containers such as bottles or flasks.

The preform shown to depict a parison **2** has a substantially cylindrical body **3** closed at one end by a hemispherical bottom **4** and being extended, at an opposite end, by a neck **5,** which neck is generally used to carry it and is open to form the mouth of the final container (as depicted on **FIG.1** and **FIG.2****).**

Instead of a preform, the parison **2** might be an intermediate container, already known, obtained during a previous blow molding or stretch blow molding step of a preform. Like a preform, such intermediate container would comprise a body **3** closed at one end by a bottom **4** and being extended, at an opposite end, by a neck **5** (which is also the neck of the preform.

Each parison **2** (here each preform) is driven in motion along a path which, in the depicted example, is linear but which may take any other shape, including an arc of a circle.

The processing unit **1** comprises a pair of parallel sidewalls **6** facing each other, which extend vertically along the path of the parisons **2,** on either side thereof, and which together define a cavity **7** in which the parisons **2** pass.

At least one (and preferably each) sidewall **6** comprises a series of similar electromagnetic processing modules **8** mounted adjacent to one another.

Each processing module **8** includes a main body **9** preferably made of a single piece of a thermally conductive material, such as a steel alloy, a copper alloy or an aluminum alloy.

As will be disclosed hereinafter, the processing module **8** includes other components mounted on the main body **9,** which therefore provides a support function for those components. The components are fixed to the main body **9** either directly or indirectly through interface elements.

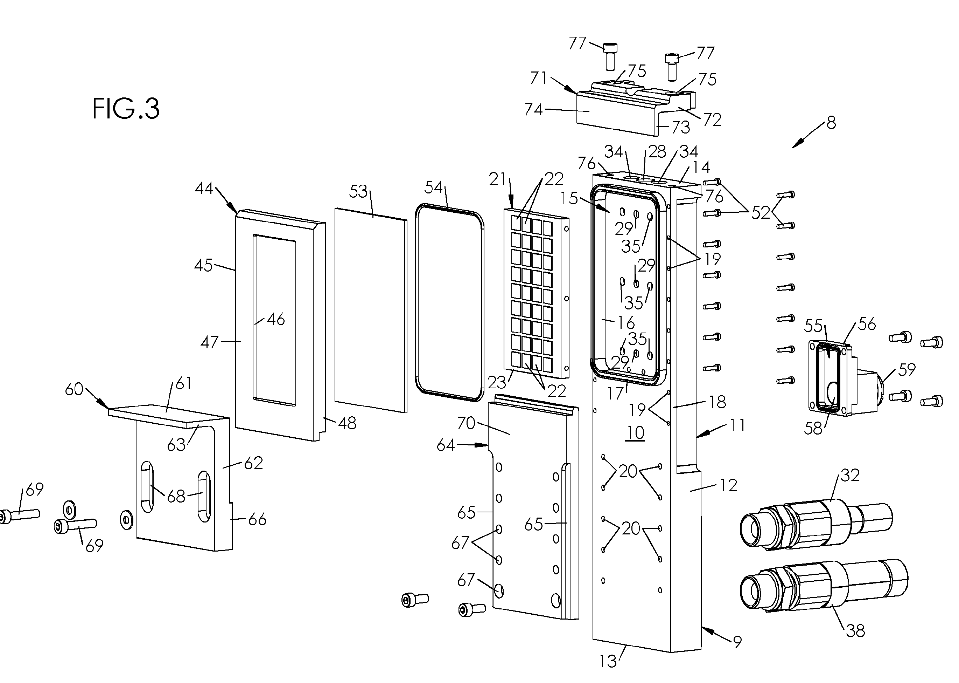

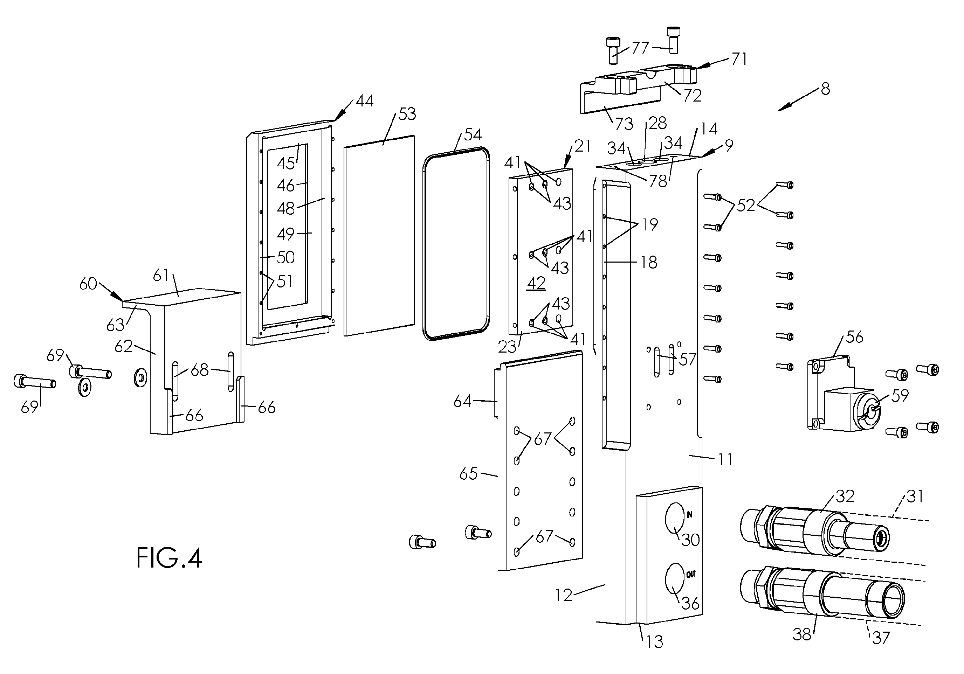

As depicted on **FIG.3** and **FIG.4****,** which are exploded perspective views of a processing module **8,** the main body **9** is substantially prismatic of shape, and has a front face **10** which, in operation (see **FIG.1****),** is oriented towards the cavity **7,** i.e. towards the parisons **2** (respectively the represented preforms).

The main body **9** also has a rear face **11,** lateral faces **12,** a lower edge **13** and an upper edge **14.**

In the following, any surface oriented in the same direction as the front face **10** is described as oriented frontwards. On the contrary, any surface oriented in a direction opposite the front face **10** is described as oriented backwards. Any surface oriented towards the lower edge **13** of the main body **9** is described as oriented downwards, whereas any surface oriented towards the upper edge **14** of the main body **9** is described as oriented upwards.

In a preferred embodiment, the main body **9** comprises a hollow front housing **15** formed in the front face **10** adjacent the upper edge **14** thereof. As depicted on **FIG.3****,** the front housing **15** is surrounded by a rib **16** protruding from the front face **10.** The rib **16** is preferably rectangular in shape and has rounded corners. A continuous groove **17** is formed in a front edge of the rib **16.**

In one embodiment illustrated in **FIG.3** and **FIG.4****,** each lateral face **12** of the main body **9** is at least partly cut out to define a lateral protruding rib **18.** This rib **18** is provided with a series of through holes **19** opening on the front face **10.** The main body **9** is also provided with a series of threaded blind holes **20** drilled in the front face **10** beneath the front housing **15.**

The processing module **8** also comprises a light emitting assembly **21** mounted onto the main body **9** and including a plurality of light emitting sources (each of microscopic dimensions and therefore not visible in the drawings).

More precisely, the sources preferably emit monochromatically or pseudo-monochromatically. In one embodiment, wherein the processing unit **1** is a heating unit designed for the thermal conditioning of the parisons **2** for the manufacturing of containers therefrom, the light emitting sources are designed for emitting in the infrared range. In another embodiment, wherein the processing unit **1** is a decontamination unit designed for the decontamination of the parisons **2,** e.g. in view of a subsequent aseptic filling, the light emitting sources are designed for emitting in the ultraviolet range. Several wavelengths or ranges (such as infrared and ultraviolet) may also be combined.

In theory, a monochromatic source is an ideal source, emitting a sinusoidal wave of a single frequency. In other words, its frequency spectrum is composed of a single ray of zero spectral width (Dirac).

In practice, such a source does not exist, a real source being at best quasi-monochromatic, i.e. its frequency spectrum extends over a band of spectral width that is small but not zero, centered on a main frequency where the intensity of the radiation is maximum. However, it is customary to imprecisely refer to such a real source as monochromatic. Moreover, a source emitting quasi-monochromatically over a discrete spectrum comprising several narrow bands centered on distinct main frequencies is called "pseudo-monochromatic" and is also referred to as a multimode source.

In one embodiment, wherein the processing unit **1** is a heating unit, the light emitting sources may be infrared laser diodes.

One possible organization form of the sources is a matrix **22,** as in the depicted example. The or each matrix **22** may be a matrix of vertical-cavity surface-emitting laser (VCSEL) diodes, known to provide a high density of sources (up to several tens or hundreds of thousands per square inch). In such an arrangement, the matrix **22** may emit several mW per square inch. With a view to heat parisons **2,** the wavelength of infrared emitted light may be of about 1 µm, substantially corresponding to a peak of energy absorbance of PET and hence providing a quick and efficient heating of the parisons **2.**

In the depicted example, and more precisely in **FIG.3****,** **FIG.4** and **FIG.5****,** the emitting assembly **21** comprises a plurality of such matrixes **22** mounted on a common substrate **23** and in turn organized to form a larger matrix. In **FIG.3****,** the emitting assembly **21** comprises thirty-six adjacent matrixes **22** but this number is arbitrary.

The light emitting assembly **21** is such mounted onto the main body **9** as to radiate frontwards. In practice, the light emitting assembly **21** is received in the front housing **15.** The light emitting assembly **21** is smaller than the front housing **15** and thinner than the rib **16.** The light emitting assembly **21** is therefore completely received within the front housing **15,** the rib **16** extending frontwards beyond the light emitting assembly **21.** The light emitting assembly **21** is tightly fixed to the main body by means of screws or any other suitable means.

In operation, the light emitting assembly **21** produces heat which, if not removed, would decrease its efficiency. The light emitting assembly **21** therefore needs to be cooled, and more precisely maintained to a substantially constant temperature.

To that end, the processing module **8** comprises a fluidic circuit **24** provided within the main body **9** for thermal regulation of the light emitting assembly **21.** The cooling fluid may simply be pure water, but any other suitable fluid may be used, such as water with an additive e.g. ethylene glycol or propylene glycol, or even a gas such as cooled air or nitrogen.

In the depicted example, the fluidic circuit **24** comprises at least one intake channel **25** and at least one discharge channel **26** formed within the main body **9.**

The intake channel **25** extends vertically within the main body **9** from a lower end **27** close to the lower edge **13** of the main body **9,** to an opposite upper end close to the upper edge **14** of the main body **9.** In practice, the intake channel **25** may be formed by vertically drilling the main body **9** from the upper edge **14,** at which the intake channel **25** is closed by a tap **28.**

The intake channel **25** opens, on the one hand, in the front housing **15** through an intake hole **29** drilled in the front face **10.** On the other hand, the intake channel **25** opens on the rear face **11** of the main body **9** through an inlet port **30.** In the example of **FIG.3****,** several intake holes **29** may be drilled in the front face **10,** thereby allowing high fluid rate and uniform cooling of the light emitting assembly **21.**

Cooling fluid is supplied to the fluidic circuit **24** by an intake duct **31** (in dotted lines on **FIG.4****)** via an intake nozzle **32** connected to the inlet port **30.**

The or each discharge channel **26** extends also vertically within the main body **9** aside (and preferably parallel to) the intake channel **25,** from a lower end **33** close to the lower edge **13** of the main body **9,** to an opposite upper end close to the upper edge **14** of the main body. In practice, the discharge channel **26** may be formed by vertically drilling the main body **9** from the upper edge **14,** at which the discharge channel **26** is closed by a tap **34.**

The discharge channel **26** opens, on the one hand, in the front housing **15** through a discharge hole **35** drilled in the front face **10.** On the other hand, the discharge channel **26** opens on the rear face **11** of the main body **9** through an outlet port **36.** In the example of **FIG.3****,** several pairs of discharge holes **35** may be drilled in the front face **10** on each side of the intake holes **29.**

The cooling fluid is discharged from the fluidic circuit **24** by a discharge duct **37** (in dotted lines on **FIG.4****)** via a discharge nozzle **38** connected to the outlet port **36.**

In the depicted example, the inlet port **30** and outlet port **36** are located one above the other, although this configuration may be regarded as optional.

In a preferred embodiment, the fluidic circuit **24** comprises a pair of discharge channels **26** formed on each side of the intake channel **25.** In the depicted example, the intake channel **25** is centrally formed in the main body **9,** and the discharge channels **26** are formed between the intake channel **25** and the lateral faces **12** of the main body **9.**

At their lower ends **33,** the discharge channels **26** commonly open to the outlet port **36** through a transversal linking channel **39.**

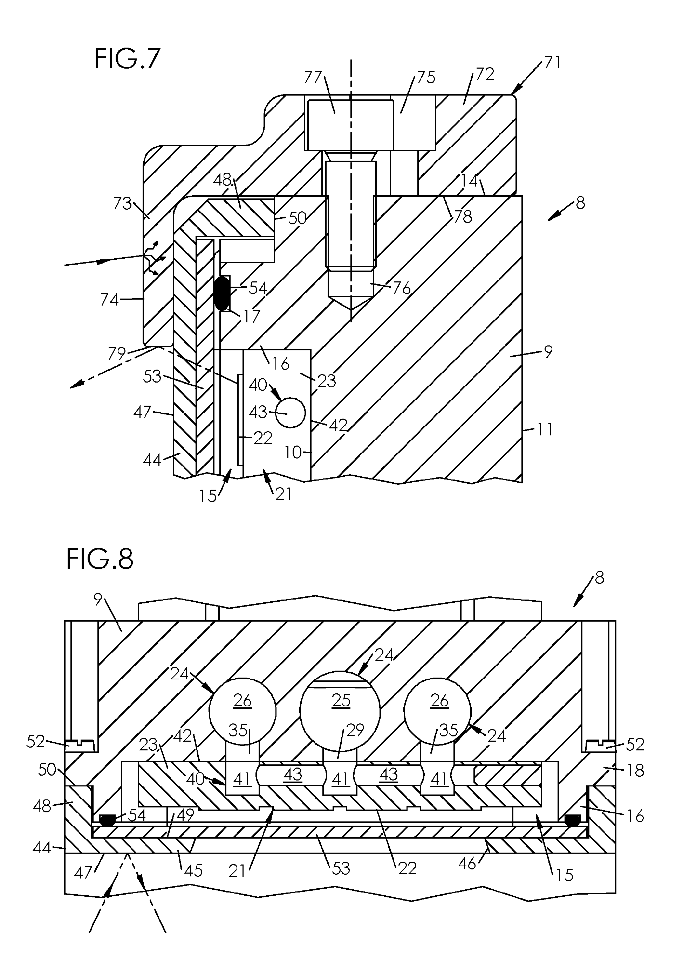

As depicted on **FIG.8****,** the light emitting assembly **21** is provided with a fluid distribution circuit **40** formed within the substrate to spread the fluid flow behind the matrixes **22** of light sources. In the illustrated embodiment, the fluid distribution circuit **40** comprises holes **41** drilled in a rear face **42** of the substrate **23,** linked by at least one transversal distribution channel **43.**

The processing module **8** further comprises at least one confinement element, mounted onto the main body **9** and made of a material opaque to infrared light and having a confinement face exposed to infrared light (either coming from the same processing module **8** or from another processing module, such as a module **8** of the opposite sidewall **6).**

The term "confinement" is used to encompass two possible optical properties of an element, material or surface: optical reflection; optical absorption. In theory, a reflective surface provides specular reflection when a ray of light coming from a single direction is reflected into an outgoing ray going to a single direction, whereas an absorbing surface provides absorption when rays of light coming from any direction are not reflected at all but completely absorbed within the surface.

Practically however, an element, material or surface may reasonably be regarded as reflective when it reflects most part of incident light, whereas an element, material or surface may reasonably be regarded as absorbing when it absorbs most part of incident light.

Depending upon its configuration, material and positioning, the confinement element(s) serve(s) to:
- reflect towards the cavity **7** at least part of the radiation it receives, in order to minimize energy loss and hence increase performances of the processing unit **1,**
- and/or absorb at least part of the radiation it receives, in order to avoid energy dispersion outside the cavity **7,** mostly for the sake of personnel safety.

In either case, a part of incident light is absorbed within the confinement element, therefore providing energy - and hence heat - thereto.

It is desired to remove at least part of that heat from the confinement element, in order to maintain the latter at a temperature where:
- thermal dissipation from the confinement element(s) (and hence undesired infrared radiation within the cavity **7)** is minimized,
- thermal fatigue of the confinement element(s), when switching the processing module **8** from a switched off state to an operational state (or vice-versa), is minimized;
- thermal inertia of the confinement element(s) - and hence of the processing module **8** and processing unit **1** - is minimized when switching the processing module **8** on.

To do so, the or each confinement element is mounted on the main body **9** so as to be in thermal contact therewith, whereby thermal regulation of the confinement face is provided by the fluidic circuit **24.**

In the depicted example, the processing module **8** comprises several confinement elements.

One confinement element is a reflector frame **44** surrounding the light emitting assembly **21.** As illustrated on **FIG.3** and **FIG.4****,** the reflector frame **44** has a rectangular panel **45** provided with a central opening **46** of rectangular contour for the passage of light emitted by the light emitting assembly **21.**

The confinement face of the reflector frame **44** is an optically reflecting front face **47** of the panel **45,** oriented frontwards.

The reflector frame **44** is preferably made of a thermally conductive material, such as a steel alloy, a copper alloy or an aluminum alloy.

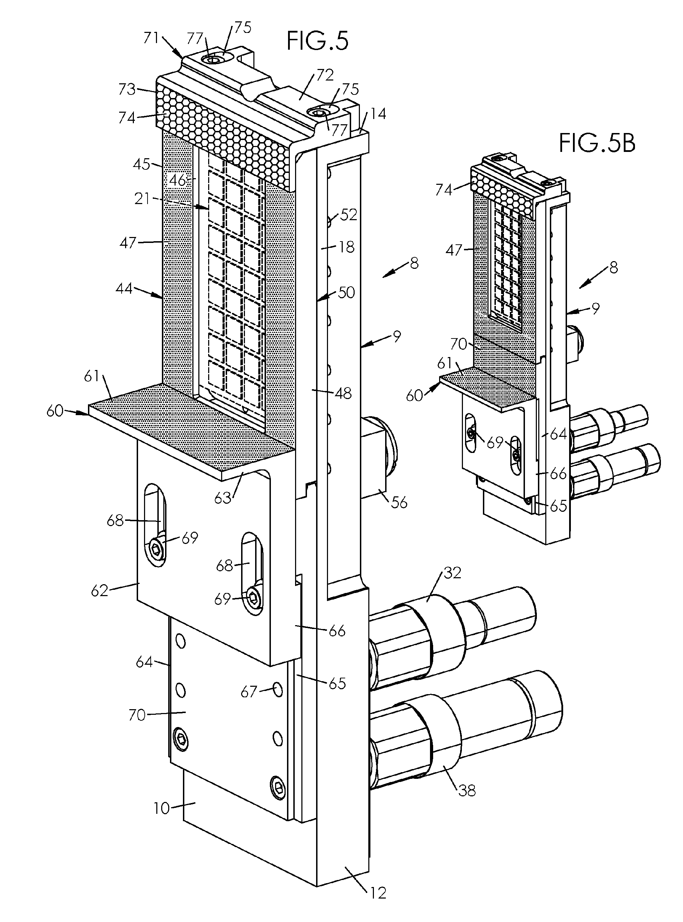

The optically reflective properties of the front face **47** may be achieved by a polishing or a coating operation, e.g. by physical vapor deposition (PVD). The coating material may be silver, platinum, aluminum or even gold. The front face **47** serves to reflect radiation from the processing modules **8** of the opposite sidewall **6** towards the parisons **2** (as illustrated by the dashed lines of **FIG.8****),** thereby increasing efficiency of the processing unit **1.** For the sake of clarity, the reflecting front face **47** is made visible in **FIG.5** by means of a shaded pattern.

As depicted on **FIG.4****,** the reflector frame **44** is provided with a support rim **48** which protrudes rearwards from a rear face **49** of the panel **45,** opposite the front face **47.** The rim **48** defines a rear edge **50** opposite the front face **47,** drilled with a series of threaded blind holes **51.**

The reflector frame **44** is mounted onto the main body **9** and fixed thereto e.g. by means of screws **52** (or any other suitable fixation means providing tight contact, such as a thermal glue) which come in helical cooperation with the blind holes **51** through the through holes **19** in the lateral rib **18.** Tightening the screws **52** against the lateral rib **18** provides tight contact between the rear edge **50** of the rim **48** and the front face **10** of the main body **9.** Such a tight contact ensures thermal contact between the main body **9** and the reflector frame **44.** Therefore, thermal regulation of the main body **9** provides thermal regulation of the reflector frame **44,** and more specifically of the front face **47** thereof. It shall be noted that, since the contact between the reflector frame **44** and the main body **9** is mainly provided in the lateral ribs **18,** this is where most of the thermal exchanges occur. As the lateral ribs **18** are closer to the discharge channels **26** than to the intake channel **25,** most of the heat extracted from the reflector frame **44** goes to the fluid flowing in the discharge channels **26,** thereby preserving the fluid flowing in the intake channel **25,** which is hence more efficient in cooling the light emitting assembly **21.**

In one preferred embodiment, disclosed in the drawings and more precisely in **FIG.3** and **FIG.4****,** the processing module **8** further comprises a transparent window panel **53** made e.g. of quartz, interposed between the rear face **49** of the reflector frame **44** and the main body **9.** Advantageously, a resilient sealing joint **54** (e.g. made of natural or synthetic rubber) is sandwiched between the window panel **53** and the main body **9.** More precisely, the sealing joint **54** is received within the groove **17** formed in the rib **16** protruding from the front face **10** of the main body **9.** Such assembly is clearly depicted on **FIG.8**.

The window panel **53** and sealing joint **54** provide watertightness to the front housing **15,** thereby limiting the risk of pollution of the light emitting assembly **21,** due to moisture from air.

In order to withdraw moisture from the front housing **15,** the processing module **8** may therefore include a desiccation chamber **55.** In the depicted example, the desiccation chamber **55** is formed within an add-on case **56** mounted on the rear face **11** of the main body **9** (e.g. by means of screws).

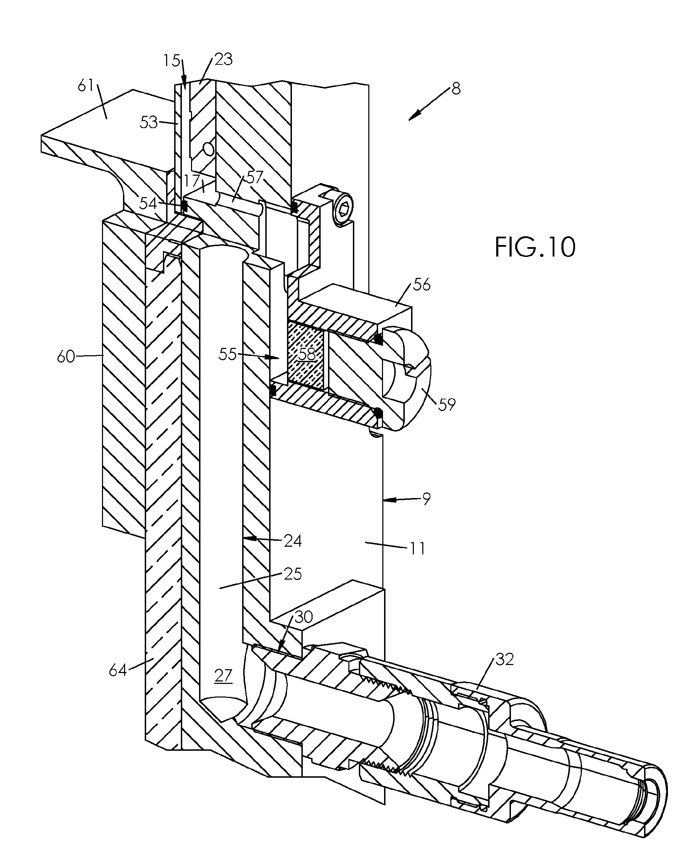

As depicted on **FIG.10****,** the main body **9** is provided with through holes **57** which put the desiccation chamber **55** into fluid communication with the front housing **15.** The desiccation chamber **55** is at least partly filled with a desiccant **58,** such as silica gel or any equivalent substance, e.g. calcium sulfate or calcium chloride. Replacement of the saturated desiccant **58** by fresh desiccant may be achieved through a removable cap **59** screwed onto the add-on case **56** and sealingly tightened thereto. Sealing joints (in black on **FIG.10****)** are preferably sandwiched between the add-on case **56** and the rear face **11** of the main body **9,** and also between the cap **59** and the add-on case **56.**

In a preferred embodiment depicted on the drawings, another confinement element is a lower reflector **60** mounted below the light emitting assembly **21.**

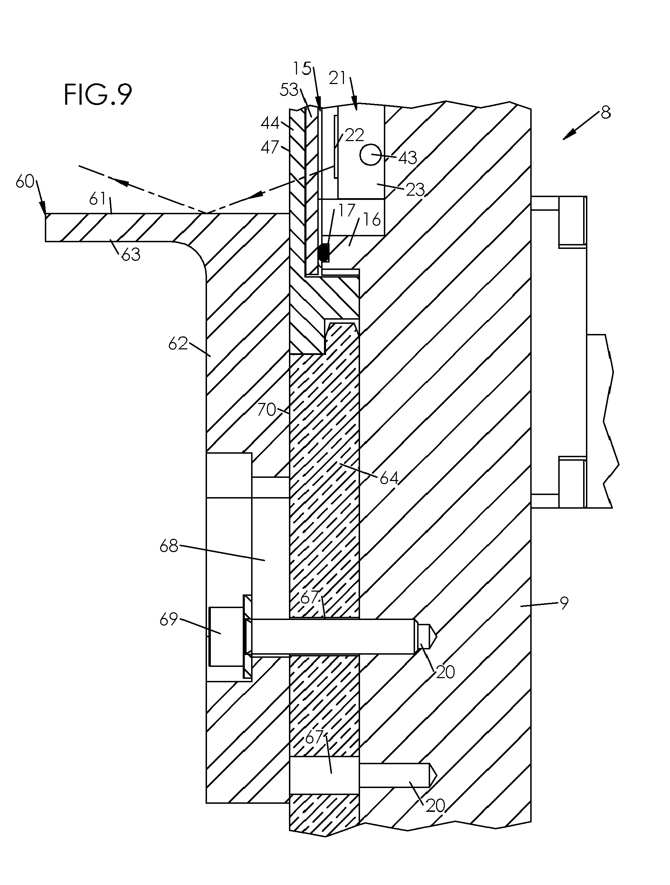

One confinement face of this lower reflector **60** is an optically reflecting upper face **61** oriented upwards. This upper face **61** serves to close the cavity **7** downwards below the parisons **2** in order to limit propagation of the radiation by reflecting it towards the bottoms **4** of the parisons **2,** when those are preforms, (as illustrated by the dashed lines of **FIG.9****),** thereby increasing efficiency of the processing unit **1.** For the sake of clarity, the upper face **61** is made visible in **FIG.5** by means of a shaded pattern.

The lower reflector **60** is preferably made of a thermally conductive material, such as a steel alloy, a copper alloy or an aluminum alloy.

The optically reflective properties of the upper face **61** may be achieved by a polishing or a coating operation, e.g. by physical vapor deposition (PVD). The coating material may be silver, platinum, aluminum or even gold.

As depicted on **FIG.3****,** the lower reflector **60** comprises a vertical lower section **62,** and a horizontal upper section **63** which protrudes frontwards from an upper end of the lower section **62** and which forms or carries the reflecting upper face **61.**

In one preferred embodiment, to make the processing unit **1** adjustable to parisons **2,** more specifically preforms, of different sizes (i.e. heights), the lower reflector **60** is mounted onto the main body **9** through a setting plate **64.** In order to allow vertical adjustment of the vertical position of the lower reflector **60** with respect of the main body **9,** the setting plate **64** is provided with runners **65** (e.g. formed by lateral grooves), whereas the lower reflector is provided with complementary ribs **66** protruding backwards from the lower section **62,** in sliding cooperation with the runners **65.**

The setting plate **64** is made of a thermally conductive material, such as a steel alloy, a copper alloy or an aluminum alloy.

The setting plate **64** is provided with a series of through holes **67** coaxial with the threaded blind holes **20** of the main body **9;** the lower reflector **60** is provided with a pair of elongated through holes **68** formed in the lower section **62** and facing the trough holes **67** of the setting plate **64** and the threaded blind holes **20** of the main body **9.**

The setting plate **64** is fixed to the main body **9** by means of a pair of screws **69** (or any other suitable fixation means providing tight contact, such as a thermal glue) which come in helical cooperation with a pair of threaded blind holes **20** of the main body **9.** The lower reflector **60** is fixed to the main body **9** with the setting plate **64** sandwiched between the lower reflector **60** and the main body **9,** by means of a pair of screws **69** which come in helical cooperation with a pair of threaded blind holes **20** of the main body **9** through a pair of through holes **67** of the setting plate **64.** A raw setting of the vertical position of the lower reflector **60** with respect of the main body **9** is achieved by choosing the threaded blind holes **20** in which the screws are inserted. Further fine setting of the vertical position of the lower reflector **60** is achieved by vertically sliding the lower reflector **60** with respect of the setting plate **64** before tightening the screws **69.** Washers may be interposed between the screws **69** and the lower reflector **60** in order to distribute stresses.

Tightening the screws **69** against the lower reflector **60** provides tight contact between, on the one hand, the lower reflector **60** and a front face **10** of the setting plate **64** and, on the other hand, the setting plate **64** and the front face **10** of the main body **9.** Such a tight contact ensures thermal contact between the main body **9** and the lower reflector **60** via the setting plate **64,** which serves as a thermal bridge between the main body **9** and the lower reflector **60.**

Therefore, thermal regulation of the main body **9** provides thermal regulation of the lower reflector **60,** and more specifically of the reflecting upper face **61.**

The setting plate **64** may act as a confinement element, in case the lower reflector **60** is fixed thereto is such a low position (e.g. when parisons **2** are of greater length) that the front face **70** of the setting plate **64** partly protrudes upwards from the reflecting upper face **61** and, therefore, faces a lower portion of the parisons **2,** as illustrated on **FIG.5****B.** The confinement face of the setting plate **64** is the front face **70,** which is optically reflecting and oriented frontwards. The optically reflective properties of the front face **70** may be achieved by a polishing or a coating operation, e.g. by physical vapor deposition (PVD). The coating material may be silver, platinum, aluminum or even gold. The front face **70** serves to reflect radiation from the heating modules **8** of the opposite sidewall **6** towards the parisons **2.** Front face **70,** used as confinement face is made visible in **FIG.5B** by means of a shaded pattern.

Another confinement element is an upper absorber **71** mounted above the light emitting assembly **21.** One main function of this upper absorber **71** is to limit upward propagation of the radiation outside the cavity **7** of the processing unit **1,** in order to protect the surroundings and personnel from possible damage due to infrared light.

As depicted on **FIG.3****,** **FIG.4** and **FIG.7****,** the upper absorber **71** is L-shaped when viewed laterally, and comprises a horizontal upper section **72** and a vertical front section **73** which vertically protrudes from the upper section **72,** at a front edge thereof.

The upper absorber **71** is made of a thermally conductive material, such as a steel alloy, a copper alloy or an aluminum alloy.

One confinement face of the upper absorber **71** is an optically absorbing front face **74,** oriented frontwards, of the front section **73.** The front face **74** may be made optically absorbing by means of an absorbing coating such as a black paint. The front face **74** absorbs at least part of the incident radiation emitted by the opposite sidewall **6,** as suggested by the broken arrows on **FIG.7****.** For the sake of clarity, the front face **74** is made visible in **FIG.5** by means of a honeycomb pattern.

The upper section **72** is provided with lateral through holes **75** facing threaded blind holes **76** formed in the upper edge **14** of the main body **9.** The upper absorber **71** is fixed to the main body **9** by means of screws **77** (or any other suitable fixation means providing tight contact, such as a thermal glue) which come in helical cooperation with the threaded blind holes **76** through the through holes **75.** Tightening the screws **77** against the upper absorber **71** provides tight contact between a lower face **78** the upper absorber **71** and the upper edge **14** of the main body **9.** Such a tight contact ensures thermal contact between the main body **9** and the upper absorber **71.** Therefore, thermal regulation of the main body **9** provides thermal regulation of the upper absorber **71.** It shall be noted that, since tight contact between the upper absorber **71** and the main body **9** is mainly provided sidewise, i.e. substantially above the discharge channels **26,** most of the heat extracted from the upper absorber **71** goes to the fluid flowing in the discharge channels **26.** In any case temperature of the fluid flowing in the intake channel to cool the light emitting assembly **21** is not (or not much) affected by the heat extracted from the upper absorber **71.**

As depicted on **FIG.5** and **FIG.7****,** the front section **73** of the upper absorber **71** partly covers the reflector frame **44** above the front housing **15.** As illustrated on **FIG.7****,** the through holes **75** are elongated in order to allow for horizontal adjustment of the position of the upper absorber **71** to adapt to the size of the preform neck **5,** when the parison is a preform.

In one particular embodiment, another confinement face of the upper absorber **71** is an optically reflective lower edge **79** of the front section **73,** oriented downwards, positioned in the vicinity of an upper edge of the light emitting assembly **21.** The optically reflective properties of the lower edge **79** may be achieved by a polishing or a coating operation, e.g. by physical vapor deposition (PVD). The coating material may be silver, platinum, aluminum or even gold.

The lower edge **79** of the front section **73** serves to reflect towards the cavity **7** part of the radiation emitted by the close infrared sources of the light emitting assembly **21,** as suggested by the dashed lines of **FIG.7**.

The processing module **8** operates as follows.

The light emitting assembly **21** is powered by an electric supply line (not shown) according to a predetermined pattern corresponding to a desired parison (preform) processing profile.

Simultaneously, fluid at moderate temperature (e.g. comprised between 10°C and 25°C, and for example of about 15°C) is supplied to the fluidic circuit **24** through the intake nozzle **32.** The fluid flows into the intake channel **25,** passes through the intake holes **29,** flows into the fluid distribution circuit **40** where it exchanges heat with the substrate **23,** whereby temperature of the substrate **23** is regulated and maintained at an approximately constant temperature (of about 25°C).

The thus heated fluid exits from the fluid distribution circuit **40** through the discharge holes **35** and flows through the discharge channels **26** where it further exchanges heat with the confinement elements **44, 60, 71** heated by the electromagnetic radiation.

More precisely, heat is withdrawn from the reflector frame **44** through the front face **10** of the main body **9,** in thermal contact with the rear edge **50** of the rim **48.** As the discharge channels **26** are located in the vicinity of the lateral faces **12** of the main body **9** (and hence in the vicinity of the rims **48),** thermal regulation of the reflector frame **44** (at a temperature comprised between 30°C and 40°C) is mainly achieved by the fluid flowing in the discharge channels **26.**

Heat is withdrawn from the lower reflector **60** through the front face **10** of the main body **9,** in thermal contact (via the setting plate **64** acting as a thermal bridge) with the lower section **62** of the lower reflector **60.** Thermal regulation of the lower reflector **60** and setting plate **64** (at a temperature comprised between 25°C and 40°C) is mostly achieved by the warmed (but still at a temperature lower than that of the lower reflector **60)** fluid flowing in the discharge channels **26.**

Heat is withdrawn from the upper absorber **71** through the upper edge **14** of the body **9,** in thermal contact, through the lower face **78,** with the upper section **72**.The fluid flowing in the discharge channels **26** exchanges heat with the upper absorber **71** via the main body **9.**

Accordingly, the confinement elements **44, 60, 71** are maintained, in operation, at a temperature close to atmospheric temperature. The processing module **8** (and hence the whole processing unit **1)** therefore has a low thermal inertia, whereby:
- when switched on, the processing unit **1** is quickly operational;
- when switched off, the processing unit 1 is quickly ready for maintenance,
- the confinement elements **44, 60, 71** are not subject to thermal fatigue and hence have longer life span;
- optical properties of the confinement elements **44, 60, 71** are constant, and hence efficiency and security of the processing unit **1** is increased.

## Claims

1. Electromagnetic processing module **(8)** including:
- a main body **(9)** having a front face **(10),**
- a light emitting assembly **(21)** including a plurality of light emitting sources, the light emitting assembly **(21)** being such mounted onto the main body **(9)** as to radiate frontwards,
- a fluidic circuit **(24)** provided within the main body **(9)** for thermal regulation of the light emitting assembly **(21);**
- at least one confinement element **(44, 60, 64, 71)** made of a material opaque to the emitted light and having a confinement face **(47, 61, 74, 79)** exposed to the emitted light,
**characterized in that** said confinement element **(44, 60, 64, 71)** is mounted onto the main body **(9)** so as to be in thermal contact therewith, whereby thermal regulation of the confinement face **(47, 61, 74, 79)** is provided by the fluidic circuit **(24).**

2. Processing module **(8)** according to claim 1, wherein the confinement element **(44, 60, 64, 71)** is fixed to the main body by means of screws or any other fixation means providing tight contact.

3. Processing module **(8)** according to claim 1 or claim 2, wherein one confinement element is a reflector frame **(44)** surrounding the light emitting assembly **(21),** and wherein one confinement face of the reflector frame **(44)** is an optically reflecting face **(47)** oriented frontwards.

4. Processing module **(8)** according to claim 3, wherein the reflector frame **(44)** has a rear edge **(50)** opposite the reflecting face **(47),** said rear edge **(50)** being in contact with the front face **(10)** of the main body **(9).**

5. Processing module **(8)** according to any of the preceding claims, wherein one confinement element is a lower reflector **(60)** mounted below the light emitting assembly **(21),** and wherein one confinement face of the lower reflector **(60)** is an optically reflecting face **(61)** oriented upwards.

6. Processing module **(8)** according to claim 5, wherein the lower reflector **(60)** is mounted onto the main body **(9)** through a setting plate **(64)** provided with means for adjusting vertical position of the lower reflector **(60)** with respect of the main body **(9),** said setting plate **(64)** serving as thermal bridge between the main body **(9)** and the lower reflector **(60).**

7. Processing module **(8)** according to claim 6, wherein the setting plate **(64)** has an optically reflecting face **(70)** oriented frontwards.

8. Processing module **(8)** according to any of the preceding claims, wherein one confinement element is an upper absorber **(71)** mounted above the light emitting assembly **(21),** and wherein one confinement face of the upper absorber **(71)** is an optically absorbing face **(74)** oriented frontwards.

9. Processing module **(8)** according to claim 8, wherein the upper absorber **(71)** has an optically reflective lower edge **(79)** oriented downwards, positioned in the vicinity of an upper edge of the light emitting assembly **(21).**

10. Processing module **(8)** according to any of the preceding claims, wherein the light emitting assembly **(21)** is received in a hollow front housing **(15)** formed in the front face **(10)** of the main body **(9).**

11. Processing module **(8)** according to claim 10, wherein the fluidic circuit **(24)** comprises at least one intake channel **(25)** formed in the main body **(9),** said intake channel **(25)** opening, on the one hand, in the front housing **(15)** through an intake hole **(29)** and, on the other hand, on a rear face **(11)** of the main body through an inlet port **(30).**

12. Processing module **(8)** according to claim 11, wherein the fluidic circuit **(24)** comprises at least one discharge channel **(26)** formed in the main body **(9)** parallel to the intake channel **(25),** said discharge channel **(26)** opening, on the one hand, in the front housing **(15)** through a discharge hole **(35)** and, on the other hand, on the rear face **(11)** of the main body **(9)** through an outlet port **(36).**

13. Processing module **(8)** according to claim 12, wherein the fluidic circuit **(24)** comprises a pair of discharge channels **(26)** formed on each side of the intake channel **(25).**

14. Processing module **(8)** according to any of the preceding claims, wherein the light emitting sources are designed for emitting in the infrared range.

15. Processing module **(8)** according to claim 14, wherein the light emitting sources are infrared laser diodes.

16. Processing module **(8)** according to claim 15, wherein the light emitting sources are VCSEL diodes.

17. Processing unit **(1)** for the electromagnetic processing of parisons made of plastic, said processing unit **(1)** comprising a series of adjacent processing modules **(8)** according to any of the preceding claims.

## Amended claims

### Amended claims in accordance with Rule 137(2) EPC.

1. Electromagnetic processing module (**8**) including:
- a main body (**9**) having a front face (**10**),
- a light emitting assembly (**21**) including a plurality of light emitting sources, the light emitting assembly (**21**) being such mounted onto the main body (**9**) as to radiate frontwards,
- a fluidic circuit (**24**) provided within the main body (**9**) for thermal regulation of the light emitting assembly (**21**);
- at least one confinement element (**44**, **60**, **64**, **71**) made of a material opaque to the emitted light and having a confinement face (**47**, **61**, **74**, **79**) exposed to the emitted light,
**characterized in that** the fluidic circuit (24) comprises at least one intake channel (25) formed in the main body (9) and at least one discharge channel (26) formed in the main body (9), said confinement element (**44**, **60**, **64**, **71**) being mounted onto the main body (**9**) so as to be in thermal contact therewith, whereby thermal regulation of the confinement face (**47**, **61**, **74**, **79**) is provided by the fluidic circuit (**24**).

2. Processing module (**8**) according to claim 1, wherein the confinement element (**44**, **60**, **64**, **71**) is fixed to the main body (9) by means of screws or any other fixation means providing tight contact.

3. Processing module (**8**) according to claim 1 or claim 2, wherein one confinement element is a reflector frame (**44**) surrounding the light emitting assembly (**21**), and wherein one confinement face of the reflector frame (**44**) is an optically reflecting face (**47**) oriented frontwards.

4. Processing module (**8**) according to claim 3, wherein the reflector frame (**44**) has a rear edge (**50**) opposite the reflecting face (**47**), said rear edge (**50**) being in contact with the front face (**10**) of the main body (**9**).

5. Processing module (**8**) according to any of the preceding claims, wherein one confinement element is a lower reflector (**60**) mounted below the light emitting assembly (**21**), and wherein one confinement face of the lower reflector (**60**) is an optically reflecting face (**61**) oriented upwards.

6. Processing module (**8**) according to claim 5, wherein the lower reflector (**60**) is mounted onto the main body (**9**) through a setting plate (**64**) provided with means for adjusting vertical position of the lower reflector (**60**) with respect of the main body (**9**), said setting plate (**64**) serving as thermal bridge between the main body (**9**) and the lower reflector (**60**).

7. Processing module (**8**) according to claim 6, wherein the setting plate (64) has an optically reflecting face (**70**) oriented frontwards.

8. Processing module (**8**) according to any of the preceding claims, wherein one confinement element is an upper absorber (**71**) mounted above the light emitting assembly (**21**), and wherein one confinement face of the upper absorber (**71**) is an optically absorbing face (**74**) oriented frontwards.

9. Processing module (**8**) according to claim 8, wherein the upper absorber (**71**) has an optically reflective lower edge (**79**) oriented downwards, positioned in the vicinity of an upper edge of the light emitting assembly (**21**).

10. Processing module (**8**) according to any of the preceding claims, wherein the light emitting assembly (**21**) is received in a hollow front housing (**15**) formed in the front face (**10**) of the main body (**9**).

11. Processing module (**8**) according to claim 10, wherein, said intake channel (**25**) opening, on the one hand, in the front housing (**15**) through an intake hole (**29**) and, on the other hand, on a rear face (**11**) of the main body (**9**) through an inlet port (**30**).

12. Processing module (**8**) according to claim 11, wherein the discharge channel (**26**) is parallel to the intake channel (**25**), said discharge channel (**26**) opening, on the one hand, in the front housing (**15**) through a discharge hole (**35**) and, on the other hand, on the rear face (**11**) of the main body (**9**) through an outlet port (**36**).

13. Processing module (**8**) according to claim 12, wherein the fluidic circuit (**24**) comprises a pair of discharge channels (**26**) formed on each side of the intake channel (**25**).

14. Processing module (**8**) according to any of the preceding claims, wherein the light emitting sources are designed for emitting in the infrared range.

15. Processing module (**8**) according to claim 14, wherein the light emitting sources are infrared laser diodes.

16. Processing module (**8**) according to claim 15, wherein the light emitting sources are VCSEL diodes.

17. Processing unit (**1**) for the electromagnetic processing of parisons made of plastic, said processing unit (**1**) comprising a series of adjacent processing modules (**8**) according to any of the preceding claims.
